# EUROPEAN PATENT SPECIFICATION

(11) **EP 1 326 125 B1**
(45) Date of publication and mention of the grant of the patent: **14.03.2007**
(21) Application number: 03005691.5
(22) Date of filing: 23.12.1996
(51) Int. Cl.: G02C 5/22, G02C 1/02, G02C 1/06

(54) **Hinge structure for eyeglasses or eyeglass frames and eyeglasses and eyeglass frames, and a method of fitting a lens into an eyeglass frame**
Scharnierstruktur für Brillen oder Brillenfassungen, Brillen und Brillenfassungen sowie Verfahren zur Montage eines Brillenglases in einer Brillenfassung
Structure de charnière pour lunettes ou montures de lunettes, lunettes ou montures de lunettes, et procédé de montage d'un verre dans une monture

(30) Priority: 22.12.1995 DK 146995; 09.02.1996 DK 13596
(43) Date of publication of application: 09.07.2003
(62) Divisional of application: 96943886.0
(73) Proprietor: Copenhagen Eyes A/S, 1452 Copenhagen K (DK)
(72) Inventor: Houmand, Jan, 1452 Copenhagen K (DK)
(74) Representative: Nielsen, Henrik Sten

(56) References cited:
- EP-A- 0 721 134
- WO-A-95/18985
- WO-A-96/18127
- WO-A-96/30799
- WO-A-96/33438
- GB-A- 2 061 549
- US-A- 4 971 431
- US-A- 5 073 020

## Description

The present invention relates to a front portion of an eyeglass frame comprising two temples and a front portion being adapted to rim and support two lenses and being provided with a nose bridge positioned between the lenses and two connecting parts connected to the two temples through respective hinges.

The present invention further relates to an eyeglass frame comprising the front portion characteristic of the present invention.

There are known a large number of eyeglasses and eyeglass frames comprising a large number of light-weight eyeglass frames of thin metal wire, particularly titanium wire, the entire frame being made of metal wire. Examples of such metal wire frames are stated in EP patents no. 0 256 098 and 0 546 589 and in Applicant's published international patent application, international application no. PCT/DK91/0322, international publication no. WO92/08198 and Applicant's corresponding European patent no. 0 554 341.

The front portion and the eyeglass frame according to the present invention represent a novel technique of producing rimmed eyeglasses as the front portion and the eyeglass frame according to the present invention comprise a component cut from a thin metal plate, the component comprising the nose bridge, the two connecting parts having edge parts adapted to interact with and retain adjacent edge parts of the lenses by engaging with grooves in the adjacent parts of the lenses, and two nose pad supporting extensions having through-going holes for receiving a respective nose pad and being turned approximately 45°-90° relative to the front portion. This component constitutes a component that, so to speak, may be set on its edge engaging with a groove preferably surrounding the lenses for fastening the lenses to the component, the groove preferably being produced by grinding the lenses.

Preferably, the thin metal plate constitutes a thin titanium plate.

In the eyeglass frame according to the present invention comprising the front portion characteristic of the present invention further comprises one or more lengths of wire fastened to said component and in combination therewith defining two apertures in the front portion of the eyeglass frame for receiving and restraining the two lenses, the wires being adapted to engage with the grooves provided in the lens edges, the wires further being adapted to restrain the lenses tightly between the edge parts of said component and the wires, the wires being provided with elastically deformable parts allowing the insertion and removal of the lenses from the front portion of the eyeglass frame in said tight restraint between the edge parts of said component and the wires. The wires are preferably made from non-deformable plastic material, e.g. carbon fibre reinforced plastic; such as PP, PE, ABS or the like, or made of metal, preferably the same metal as the above-mentioned component, particularly titanium. The wires are preferably provided with elastically deformable parts, such as loops or clamps, which are elastically deformed when yielding, or angles or similar geometrical forms which, when straightened elastically, may be caused to expand sufficiently for receiving the lenses or allow their removal from the front portion of the eyeglass frame.

In accordance with alternative embodiments, the eyeglasses or eyeglass frame according to the invention may be provided with hinges which are fastened to the above-mentioned component, preferably by welding, or are part of the above-mentioned wires.

In the following, the invention will be further elucidated with reference to the drawings, wherein
Fig. 1 shows a laser cutting technique for cutting the front portion according to the present invention of an eyeglass frame according to the present invention,
Fig. 2a shows an embodiment of eyeglasses according to the present invention and having a front portion according to the present invention made in accordance with the technique shown in Fig. 1,
Figs. 2b-2i show details of alternative embodiments of the eyeglass frame shown in Fig. 2a, and
Figs. 3a and 3b show a detail of the production technique which after completing the laser cutting technique shown in Fig. 1 is used for producing the front portion according to the present invention and the temples from one and the same piece of material.

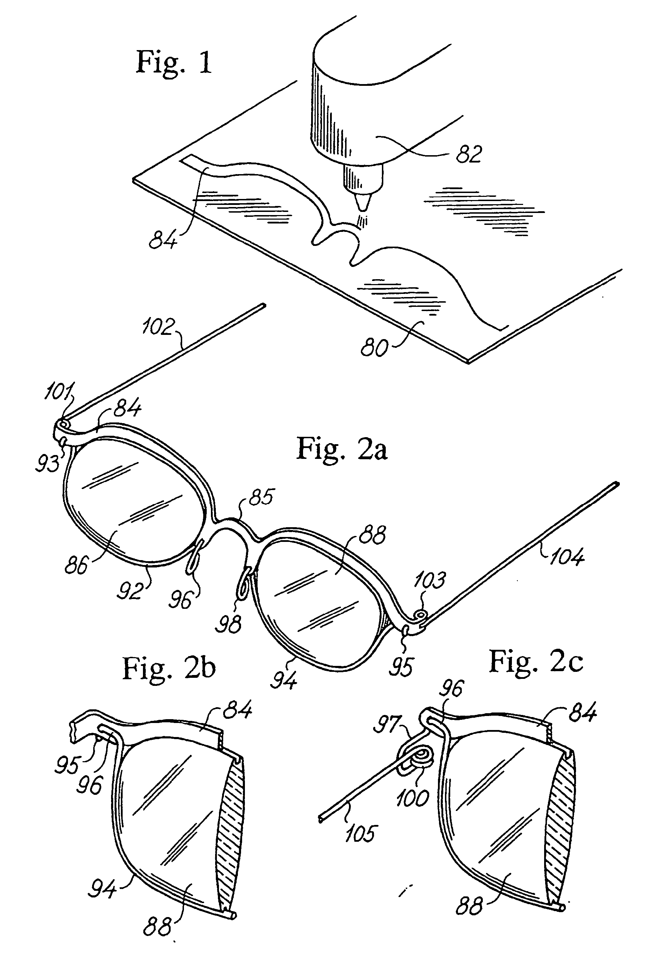

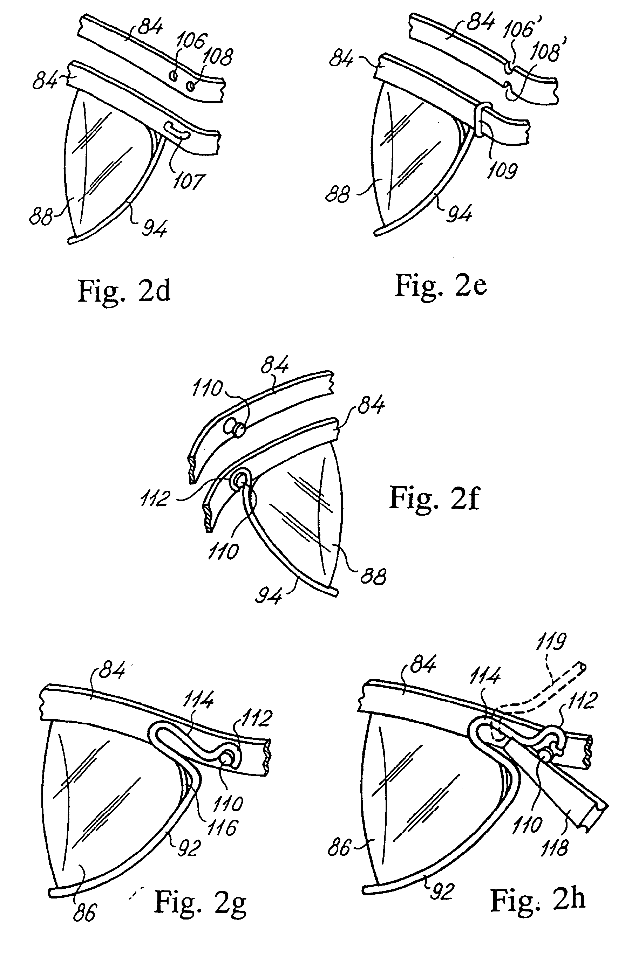

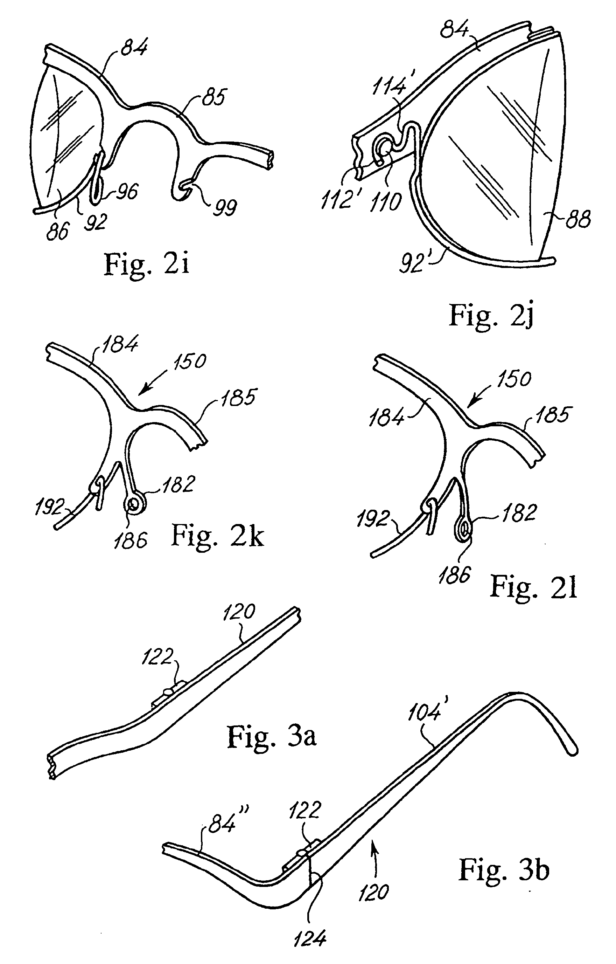

Fig. 1 shows a technique for producing a front component according to the present invention of an eyeglass frame according to the invention, the front component being produced from a thin metal plate, preferably a thin titanium plate. The front component according to the present invention is cut from a thin titanium plate 80, preferably having a thickness of 0.5-1.5 mm, preferably approx. 0.6-1 mm, by means of a cutting tool 82 which preferably is a high energy laser, the thin metal plate being cut such as to produce a plane, thin metal component, which is designated reference numeral 84 in Fig. 1 and is shown in a partially cut condition. Apart from being cut, the metal component 84 is also processed by the laser 82, the metal component 84 being "drilled" so at to provide holes in the metal component 84 for receiving a length of wire, preferably a length of titanium wire, as will be explained below with reference to Fig. 2a.

Fig. 2a shows a further embodiment of eyeglasses according to the present invention, the embodiment as a whole being designated reference numeral 90 and comprising the wire component 84 described above with reference to Fig. 1, the wire component after having been cut from the titanium plate 80 being subjected to further processing, the front component which is plane after being cut being processed or in other ways treated for being adapted to the groove in which the component subsequently will be mounted, and bent into the form shown in Fig. 2a. Hereby the outermost terminal portions of the metal component are bent, the terminal portions forming the outermost ends of the front portion of the eyeglasses at the hinge connections to the temples, and the area of the front component adapted to extend over the root of the user's nose is preferably bent in such a way that the nose bridge of the eyeglass frame extends approximately parallel to the user's nose dorsum during use.

As mentioned above and shown in Fig. 2a, the front component 84 is provided with "drill holes" through which the mentioned lengths of wire are inserted, thus fastening and rimming the respective lenses 86 and 88. The two lengths of wire rimming the respective lenses 86 and 88 are designated reference numerals 92 and 94. The wire 92 is inserted through a hole in the nose bridge 85 of the front component and forms a downwardly extending loop 96 for receiving and retaining a nose pad. Correspondingly, the wire 94 is inserted through a corresponding hole in the opposite side of the nose bridge 85 and forms a loop 98, also for receiving and retaining a nose pad. Even though the wires 92 and 94, as shown in Fig. 2a, are inserted from the back of the front component 84 and thus form loops 96 and 98 positioned at the front or exterior surface of the front component 84 of the eyeglasses, the wires 92 and 94 may alternatively be inserted through the mentioned holes from the opposite direction and thus form loops corresponding to the loops 96 and 98, but embedded behind the front portion of the eyeglasses. The opposite end of the wire 92 is inserted through another hole in the front component 84, forming a bent terminal portion 93, the wire 94 correspondingly forming a bent terminal portion 95, for fastening the respective wires surrounding and enclosing the respective lenses in the eyeglass frame.

As will clearly appear from Fig. 2b, the wires 92 and 94 are not inserted directly from the lower surface of the lens and continuing upwardly through the corresponding hole, thus forming the bent terminal portions 93 and 95, but are provided with a bend as shown in Fig. 2b, which is a more detailed view of the rim of the lens 88 seen from the back and showing a wire portion 96 extending parallel to and hidden behind the front component 84. The function of the bend is to give elasticity to the wire 94 to allow the respective lens to be mounted in the frame, as the wire 94 shown in Fig. 2b may be bent downwardly and thus, by the elastic movement of the wire 94, allows the lens 88 to be inserted between the lower edge of the front component 84 and the wire 94, thus retaining it therebetween. Furthermore, it appears clearly from Fig. 2b how the front component 84 provides an edge which is received in a groove in the lens 88, the lens 88 being provided with a groove surrounding the edge thereof for receiving the front component 84 and the wire 94, essentially in the manner described for the above-mentioned rimmed eyeglasses 30 and 30' shown in Figs. 3a and 3b. In the embodiment shown in Figs. 2a and 2b, the outermost ends of the front component 84 continue through mounted, i.e. welded hinges into the respective temples. The two hinges as a whole are designated reference numerals 101 and 103 and are positioned at the terminal portions of the front component 84 adjacent to the bent wire ends 93 and 95, respectively, and the respective temples are designated reference numerals 102 and 104.

As shown in Fig. 2c, the eyeglasses shown in Fig. 2a may alternatively be provided with a hinge structure according to the present invention wherein the wires 92 and 94 may be prolonged, thus not only forming respective bent terminal portions 93 and 95, but continuing round the corners of the eyeglasses and forming any of the hinge structures described above with reference to Figs. 1-6 of the drawings, e.g. the hinge structure shown in Fig. 2c designed according to Fig. 2, the wire 94 being prolonged past the bent terminal portion 95 and forming a loop corresponding to the loop 16j' described above with reference to Fig. 2a, the loop enclosing a coil 100 being formed at the outermost end of a temple 105 and, similarly to the above mentioned coil 22", being surface ground, so that the coil 100 defines two mutually parallel upper and lower surfaces restrained between the bent ends of the coil formed in the wire 97.

Fig. 2d shows an alternative embodiment of the eyeglasses shown in Fig. 2a, or more particularly an alternative embodiment of the fastening of the wires 92 and 94 to the front component 84. Thus, in Fig. 2d the front component is, as shown in the upper part of Fig. 2d, provided with two through-going holes 106 and 108, through which the wire 94 is inserted as shown in the lower part of Fig. 2d, accomplishing a locking of the wire 94 which is inserted from the back of the front component 84 to the front through the hole 106 and further along the front component 84, thus providing a locking clamp 107 which is inserted towards the back through a second hole 108, the wire 94 being cut off at the back of the front component behind the hole 107.

Fig. 2e shows an alternative technique for retaining the wires 92 and 94, the technique differing from the two-hole fixation shown in Fig. 2d inasmuch as the two holes 106 and 108 are replaced by two cutouts 106' and 108' shown in the upper part of Fig. 2e. As shown in the lower part of Fig. 2e the wire 94 is inserted through and locked in the cutouts 106' and 108', thus providing a locking of the wire 94 essentially in the manner known in the electronic field as "wire wrapping". As shown in Fig. 2e, the wire 94 is inserted behind the front component 84 and led to the front through the cutout 106', thus forming a loop 109, the lower end of which is locked behind the front component 84 adjacent to the notch 108'.

Instead of fastening the wires 92 and 94 in holes or cuts, there may, as shown in Figs. 2f-2h, be used a rivet 110 mounted on the front component 84 and extending backwardly or inwardly relative to the frame or eyeglasses. The rivet 110 is preferably made of the same metallic material as the front component 84 and may be mechanically mounted in a through-going hole in the front component 84, either forming an ornamentation or being surface ground to be essentially invisible on the front component 84, the material of the rivet 110 being visible at the front surface of the front component 84, i.e. opposite the surface shown in Figs. 2f-2h, matching completely the material of the front component 84. For cooperation with the rivet 110, the wire 94 is provided with an elastic locking loop 112 locking around the rivet 110 when the wire 94 is mounted on the front component 84, as shown in Fig. 2f, thus retaining the lens 88 between these components.

The wire 94 may be made of a elastic material which in itself allows the wire to be stretched for inserting the lens 88 in the frame, or alternatively extract the lens 88 from the frame. Alternatively, the locking loop 112 may be adapted to be elastic in itself, thus allowing the lenses to be inserted in and extracted from the frame. In an alternative embodiment of the frame construction shown in Fig. 2f, the wire 92, as shown in Fig. 2g, forms an elastic clamp or loop 114 connecting the locking loop 112 of the wire 92 with the portion of the wire 92 restraining and rimming the lens 86. The reference numeral 116 in Fig. 2g indicates an area of the wire 92, shown exaggerated in Fig. 2b, allowing the wire 92 to continue from a position enclosing the edge of the lens 86 and backwardly relative to the front component 84 and to lock around the rivet 110. As shown in Fig. 2h, the elastic clamp 114 allows the wire 92 to be expanded, i.e. elastically deformed, by means of an appropriate tool, e.g. a wedge 118 or a claw-like tool 119, for allow the locking loop 112 to be lifted above the rivet 110 to fasten the wire 92 to the front component 84. Correspondingly, the tools 118 and 119 may be used for demounting the wire 92 from the component 84, in case the lens 86 is to be extracted from the finished eyeglasses. The embodiment of the eyeglass frame or eyeglasses according to the present invention shown in Figs. 2g and 2h provides the wires rimming the lenses with the elasticity required to mount the lenses or extract them from their position in the front portion of the eyeglass frame, in which they are retained by the elastic clamp or loop 114 which in the embodiment shown in Figs. 2g and 2h is provided adjacent to the locking loop 112. Depending on the geometrical configuration of the eyeglass frame, the elastic damp may alternatively be provided in any other part of the wire, e.g. the wire 92.

Fig. 2i shows an alternative embodiment of the eyeglasses shown in Fig. 2a, where the wires 92 and 94 are not inserted through holes in the downwardly extending lobes of the front component 84 on each side of the nose bridge, but through cutouts, one of which is assigned reference numeral 99. This embodiment of the eyeglass frame allows the wire 92 to be mounted by fastening it to the end portion of the front component 84 opposite the one shown in Fig. 2i, i.e. by means of the bent terminal portion 93 shown in Fig. 2a, the wire 92 thereafter being fastened in the cutout in the mentioned lobe-shaped part, thus hooking it on the front component 84, as shown in Fig. 2i.

In the embodiments described above with reference to Figs. 2a-2i, the lenses 86 and 88 are mounted by the front component 84 and the wires 92 and 94 engaging in grooves surrounding the respective lenses. Alternatively, the above mentioned combined front component and wire rimming technique may be used for providing an eyeglass frame and eyeglasses of a conventional configuration known per se, wherein the lens assigned reference numeral 86' in Fig. 3, is provided with an edge adapted to engage with a groove provided in the frame components, the groove in Fig. 3 being provided in the lower surface of the front component 84' and, correspondingly, provided by a profiled wire component 92', which has been formed, preferably by rolling, into the shape shown in Fig. 3, forming an inner groove or furrow for receiving and retaining the lens 86. The embodiment of the eyeglass frame shown in Fig. 3 can easily be combined with any of the above rimming techniques described above with reference to Figs. 2b-2i and equivalent techniques for providing fully rimmed eyeglasses having a front component 84' made from a thin metal plate and a corresponding wire rim. Furthermore, it is noted that the above mentioned metal wire, particularly titanium wire, may be replaced by e.g. carbon fibre reinforced plastic material or other, preferably elongation-proof plastic material, which depending on the geometrical embodiment of the eyeglass frame may be coloured or alternatively appear as a transparent material which after mounting the lenses in the finished eyeglass frame matches the transparent lens material.

Fig. 2j shows an alternative embodiment of the eyeglasses shown in Figs. 2g and 2h, comprising a wire 92' which forms a resilient clamp 114' and ends in a locking loop 112' locked around the rivet 110. The resilient clamp 114' of Fig. 2j does not form an angle at the outwardly pointing corner of the lens, as is the case with the resilient clamp or loop 114 of Fig. 2g, but follows the shape of the lens 88, rimming it up to an area neighbouring the front component 84. From said area on, the wire 92' has a straight, vertical portion up to approximately the middle of the front component 84 width, followed by an S-shaped loop substantially perpendicular to the vertical portion and concealed behind the front component 84, providing the resilience necessary for the wire rim to be fastened to or unfastened from the front component 84 by means of being locked around the rivet 110. A tool such as an optician's screwdriver can be used for demounting the wire 92' from the component 84, if the lens 88 is to be extracted from the finished glasses. Alternatively, and preferably, a tool constituted by a hollow pin is used for demounting the wire 92' from the component 84, which tool is readily contacted with the outer free end of the locking loop 112' and used for lifting the locking loop 112' off its engagement round the rivet 110. The lens 88 may have on its outermost part the shape of a curve with an inflection point, as, for example, a circle, an ellipse, a parabola or a combination of two intersecting curves having specific radii of curvature, and the wire 92' may advantageously enclose the edge of the lens 88 up to a point beyond the inflection point of said curve, ensuring that said enclosure is fastened in a secure and reliable manner. Alternatively, the shape of the lens 88 may be substantially rectangular (rectangular with rounded corners), trapezoidal or, generally speaking, polygonal (convex or concave), the method of rimming the lenses is the above-mentioned one, in which the wire 92' follows the contour of the lens up to an area neighbouring the front component 84, whereafter the wire has a straight portion and ends into an S-shaped loop.

Figs. 2k and 2l show the left portion of a front component 184 of an eyeglass frame 150. A portion of a nose bridge 185 and a left nose pad supporting extension 182 comprising a hole 186 are also shown in Figs. 2k and 2l. The eyeglass frame 150 is cut from a plate of a suitable material in a single operation, similarly to the method described in connection with Fig. 1. In order to mount a nose pad onto the nose pad supporting extension 182, the extension 182 is, as shown in Fig. 21, turned approximately 45-90), preferably clockwise seen from behind the eyeglasses, so that a nose pad (not shown) can be mounted into the hole 186. A wire 192 corresponding to the wire 92 in Fig. 2i is to be cut close to the exsertion point from the frame 150 and polished.

Common to the above described embodiments of the eyeglasses described above with reference to Figs. 2a-2l is a unique structure which is combined through a front component and two or more wire components which are interconnected by means of rivets, hooks, etc. without the employment of screws or similar connecting elements which are commonly used in eyeglasses and which after some time get loose and often are wasted. The above described embodiments are unique in the design of the eyeglasses as the eyeglasses are readily connected through interconnecting the various components or elements of the eyeglasses.

Figs. 3a and 3b show a particularly advantageous feature of the present technique, according to which there is used a front component made from a thin metal plate, the front component preferably being produced by laser cutting the thin metal plate. Fig. 3a shows a member 120 made of a thin metal plate, being an extension of the front component 84 providing one of the temples of the finished eyeglasses, and made of the same material as the front component 84. In accordance with the technique shown in Figs. 3a and 3b, the front component 84 is preferably provided with one further extension corresponding to the extension 120 for providing the second temple of the finished eyeglasses. Reference numeral 122 in Fig. 3a indicates a hinge welded to the side of the component 120 constituting the backside thereof in the finished eyeglasses and situated in a position where a hinge connection between the temple and the front component, i.e. the front component 84, is to be provided in the finished eyeglasses. After mounting the hinge 122 by welding, a cut 124 is provided by a mechanical process, thus dividing the component 120 at the hinge axis of the hinge 122, as shown in Fig. 3b, followed by bending the two separate parts 84" and 104' of the component 120 into the shape desired for the front component 84" and the temple 104'. The production of the temple 104' in one piece with the front component 84", and the production of the second temple, which is not shown in Figs. 3a and 3b, in one piece with the front component 84", partly results in a proper mounting of the hinges relative to the frame and thus of the temples relative to the front portion of the frame, and partly in a frame construction without visible joinings between the temples and the front component other than the above mentioned cut 124 through the component 120, the material of the temples, e.g. temple 104', being joined invisibly with the material of the front component 84" at the hinge connection, which inevitably would be the case if the temple or temples and the front component were made of different plate materials.

## Claims

1. A front portion of an eyeglass frame comprising two temples (102, 104) and a front portion (84) being adapted to rim and support two lenses (86, 88) and being provided with a nose bridge (85) positioned between the lenses (86, 88) and two connecting parts connected to the two temples through respective hinges (101, 103), **CHARACTERIZED in that** the front portion (84) of the eyeglass frame comprises a component cut from a thin metal plate (80), the component comprising the nose bridge (85), the two connecting parts having edge parts adapted to interact with and retain adjacent edge parts of the lenses by engaging with grooves in the adjacent parts of the lenses, and two nose pad supporting extensions (182) having through-going holes (186) for receiving a respective nose pad and being turned approximately 45°-90° relative to the front portion.

2. The front portion according to claim 1, the component being cut from a thin titanium plate (80).

3. Eyeglasses comprising the front portion according to any of the claims 1 or 2 and further comprising one or more lengths (92, 94) of wire fastened to said component and in combination therewith defining two apertures in the front portion of the eyeglass frame for receiving and restraining the two lenses (86, 88), the wires (92, 94) being adapted to engage with the grooves provided in the lens edges, the wires (92, 94) further being adapted to restrain the lenses tightly between the edge parts of said component (84) and the wires (92, 94), the wires (92, 94) being provided with elastically deformable parts (96) allowing the insertion and removal of the lenses (86, 88) from the front portion of the eyeglass frame in said tight restraint between the edge parts of said component and the wires.

4. The eyeglasses according to claim 3, **CHARACTERIZED in that** the wires (92, 94) are made of a non-deformable plastic material, e.g. carbon fibre reinforced plastic such as PP, PE, ABS or the like, or are made of metal, preferably of the same metal as said component, particularly titanium.

5. The eyeglasses according to any of the claims 3 or 4, **CHARACTERISED in that** the hinges (101, 103) are fastened to said component (84), preferably by welding, or constituted by wire hinges made from said wire portions.

## Patentansprüche

1. Vorderteil einer Brillenfassung umfassend zwei Bügel (102, 104) und einen Vorderteil (84), der zum Umrahmen und Stützen zweier Gläser (86, 88) verwendet ist und mit einem Steg (85), der zwischen den Gläsern (86, 88) platziert ist und zwei Verbindungsteile, die mit den beiden Bügeln über entsprechende Gelenke (101, 103) verbunden sind,
**dadurch gekennzeichnet, dass** der Vorderteil (84) der Brillenfassung eine Komponente, die aus einer dünnen Metallplatte (80) ausgeschnitten ist, umfasst, wobei die Komponente den Steg (85), die beiden Verbindungsteile, die Randteile, die zum Interagieren mit den benachbarten Randteilen der Gläser und zum Festhalten derselben durch Eingreifen in Nuten in den benachbarten Teilen der Gläser besitzen und zwei Verlängerungen (182) zum Stützen der beiden Nasenflügel, die durchgehende Löcher (186) zur Aufnahme eines entsprechenden Nasenflügels aufweisen und ungefähr 45°-90° im Verhältnis zum Vorderteil gedreht sind, umfasst.

2. Vorderteil nach Anspruch 1, wobei die Komponente aus einer dünnen Titanplatte (80) ausgeschnitten ist.

3. Brille umfassend den Vorderteil nach Anspruch 1 oder 2 und ferner eine oder mehrere Längen (92, 94) Draht, der an genannter Komponente befestigt ist und bei Vereinigung damit, zwei Öffnungen im Vorderteil der Brillenfassung zur Aufnahme und zum Festhalten der beiden Gläser (86, 88) bildet, und die Drähte (92, 94) ferner zum Eingreifen in die an den Gläserrändern vorgesehenen Nuten verwendet sind und die Drähte (92, 94) ferner zum Festhalten der Gläser zwischen den Randteilen genannter Komponente (84) und den Drähten (92, 94) verwendet sind und die Drähte (92, 94) mit elastisch verformbaren Teilen (96), die das Einsetzen und Entnehmen der Gläser (86, 88) vom Vorderteil der Brillenfassung in genannter Halterung zwischen den Randteilen genannter Komponente und den Drähten ermöglicht, verwendet sind, umfasst.

4. Brille nach Anspruch 3, **dadurch gekennzeichnet, dass** die Drähte (92, 94) aus unverformbarem Kunststoff, z.B. mit Kohlenfaser verstärktem Plastik wie PP, PE, ABS oder ähnlichen oder aus Metall, vorzugsweise demselben Metall wie genannte Komponente, insbesondere Titan, hergestellt sind.

5. Brille nach Anspruch 3 oder 4, **dadurch gekennzeichnet, dass** die Gelenke (101, 103) an genannter Komponente (84) vorzugsweise durch Schweißung befestigt oder aus Drahtgelenke, die aus genannten Drahtteilen bestehen, hergestellt sind.

## Revendications

1. Portion antérieure d'une monture de lunettes comprenant deux branches (102, 104) et une portion antérieure (84) apte à entourer et supporter deux verres (86, 88) et équipée d'un pont (85) situé entre les verres (86, 88) et deux parties de liaison reliées aux deux branches par deux charnières respectives (101, 103), ***caractérisée en ce que*** la portion antérieure (84) de la monture de lunettes comprend un élément découpé dans une mince plaque (80) de métal, l'élément comprenant le pont (85), les deux parties de liaison ayant des parties en bordure aptes à interagir avec et retenir des parties de chant adjacentes des verres par engagement avec des rainures dans les parties adjacentes des verres, et deux prolongements (182) pour le support de plaquettes, présentant deux trous de passage (186) pour recevoir une plaquette respective et recourbés d'environ 45° à 90° par rapport à la portion antérieure.

2. Portion antérieure selon la revendication 1, l'élément étant découpé dans une mince plaque de titane (80).

3. Lunettes comprenant la portion antérieure selon l'une quelconque des revendications 1 ou 2, et comprenant en plus une ou plusieurs longueurs (92, 94) de fil fixées audit élément et, en combinaison avec celui-ci, définissant deux ouvertures dans la portion antérieure de la monture de lunette destinées à recevoir et bloquer les deux verres (86, 88), les fils (92, 94) étant aptes à s'engager avec les rainures ménagées dans les chants des verres, les fils (92, 94) étant de plus aptes à bloquer étroitement les verres entre les parties de chant dudit élément (84) et les fils (92, 94), les fils (92, 94) étant pourvus de parties élastiquement déformables (96) permettant l'insertion et le retrait des verres (86, 88) de la portion antérieure de la monture de lunettes dans ledit blocage étroit entre les parties de chant dudit élément et les fils.

4. Lunettes selon la revendication 3, ***caractérisées en ce que*** les fils (92, 94) sont faits d'une matière plastique non déformable, par exemple une matière plastique renforcée de fibres de carbone, comme par exemple le PP, le PE, l'ABS ou similaire, ou sont faits de métal, de manière préférée du même métal que ledit élément, et en particulier de titane.

5. Lunettes selon l'une quelconque des revendications 3 ou 4, ***caractérisées en ce que*** les charnières (101, 103) sont fixées audit élément (84), de manière préférée par soudage, ou sont constituées par des charnières en fil réalisées à partir desdites portions de fil.
